# EUROPEAN PATENT APPLICATION

(11) **EP 1 066 949 A1**
(43) Date of publication of application: **10.01.2001**
(21) Application number: 00114608.3
(22) Date of filing: 07.07.2000
(51) Int. Cl.: B29C 49/00, B60K 15/03

(54) **Hollow polyamide body obtained by extrusion and blow moulding**

(30) Priority: 08.07.1999 IT MI991506
(71) Applicant: ITIB S.P.A., 25050 Paderno Franciacorta, (Brescia) (IT)
(72) Inventor: Bonardi, Alberto, 25100 Brescia (IT)
(74) Representative: Petruzziello, Aldo

(57) **Abstract**

An article (1) obtained by blow molding of a hollow body or parison obtained by extrusion of polyamide based plastic material, so as to bear decoration by painting or transfer printing, having a uniform distribution of thicknesses and a high mechanical resistance.

## Description

The present invention refers to hollow bodies, obtained by extrusion and blowing of polyamide resins, and in particular it refers to technical articles requiring decoration by application of paint or transfers, such as motor cycle tanks or shells for electrical appliances.

Two particular technologies are currently used for obtaining hollow bodies: blowing and rotomolding.

Blowing requires different steps following one another.

The first step concerns extrusion of plastic material for the formation of a tube or hollow body commonly known as a preform or parison.

In the next step the parison is closed between two forming half-molds, wherein it is blown by means of gas or air under pressure. In this stage the use of additional mechanical forming and sizing apparatus may be required, in order to obtain the hollow end product.

This extrusion-blowing technology prevalently uses thermoplastic materials such as propylene and high-density polyethylene. A characteristic of the blow-molded body is that it has no sharp edges and may be of non uniform thickness.

The products obtained by blowing present problems related principally to the difficulty in obtaining thicknesses that allow sufficient mechanical resistance in the critical areas. This problem is accentuated considerably in the production of technical articles, that is to say, articles that have an irregular surface with several curved parts, such as fuel tanks for vehicles for example.

For the production of hollow items with a linear geometric shape, such as tubes or pipes, use has been made lately of plastic material composed of polyamide or nylon which gives the end product better mechanical resistance. These items, such as the ducts for the air conditioning system of vehicles, for example, are used for the inner parts of cars, however, thus they do not require decorative characteristics and consequently they do not need any surface painting.

Technical articles obtained by blowing of polypropylene and polyethylene, on the other hand, cannot have decorative characteristics, in that they cannot be painted. In fact both propylene and polyethylene do not have a good resistance to hydrocarbon osmosis, and the products obtained do not maintain their painted finish. For this reason, the tanks of motor cycles obtained by blowing are often enclosed in a metal casing that can be suitably painted to improve the appearance of the motor cycle.

Rotomolding is currently used to overcome these drawbacks. In this technology a mixture made of polyamide powder (Nylon) and caprolactam is used as the starting material. This mixture is melted and introduced in the semi-solid state into a closed mold consisting of two half-shells. This mold is made to rotate, hinged on a fulcrum, so as to make appropriate orbits of rotation. In this manner, the molten mixture inside the mold is dispersed onto the walls of the mold thanks to the centrifugal force dissipated by the rotary movement of the mold. Consequently, when the mixture solidifies it takes on the desired shape, in accordance with the walls of the mold.

It is possible by means of rotomolding to obtain technical articles with uniform distributions of thickness and able to bear surface application of paint or transfers. None the less, this technology proves to be very complex and allows an extremely limited production speed (maximum hourly production two items). Consequently articles produced by rotomolding prove extremely costly and moreover their limited production is unable in any case to meet the market demand.

Another technology for obtaining technical articles with a low static permeability, such as fuel tanks for example, is so-called multi-layer technology which involves the use of different materials to form a hollow body consisting of a plurality of layers.

Multi-layer technology can in any case be adopted prevalently by means of rotomolding with the above mentioned drawbacks related to this type of molding.

Multi-layer technology can also be used in blowing, with the coextrusion method, and in this case also there are drawbacks due to the complexity of the coextrusion head and the incompatibility of different materials during blowing.

The object of the invention is to eliminate said drawbacks by providing a hollow body obtained by extrusion and blowing that has decorative characteristics, having a surface able to bear decoration and painting.

Another object of the present invention is to provide a technical article obtained by extrusion-blowing that has uniformity of thickness and high mechanical strength.

Yet another object of the present invention is to provide a hollow body obtained by extrusion-blowing whose manufacture is fast, economical and simple.

These objects are achieved according to the invention with the characteristics listed in appended independent claim 1.

Preferred embodiments of the invention will be apparent from the dependent claims.

In the present invention the blowing technology with the use of polyamide-based materials is employed. Among the polyamide-based materials, preference is given to those that contain a fibreglass filler (for example up to 15% in weight of fibreglass) and that display the following mechanical and thermal characteristics:
- Tensile modulus of 1850-6500 Mpa,
- Isod-V impact strength of of 14.5-90 KJ/m² measured at 0-23°C,
- Charpy-V impact strength of 20 KJ/m² measured at -30°C
- Melting point of 222-280°C,
- Linear expansion coefficient // of 4-7 E-5°C measured at 23-85°C.

In this manner products are obtained with good characteristics of resistance coupled with great toughness, high impact strength and resistance to molecular osmosis of hydrocarbons. This latter characteristic is to be considered important in the automobile and motor cycle industry. Use of the polyamide material brings advantages in terms of observance of the safety specifications concerning migration of pollutant and inflammable additives, such as fuel oils. Manufactured products according to the invention, obtained with polyamides by means of blowing, have the following features:
- Low static permeability complying with the standards for emission into the air of hydrocarbons (EURO 96, EURO 2000 and CARB-USA).
- Excellent dissipation of electrostatic charges (as regards electromagnetic compatibility).
- Excellent resistance to chemical reagents.
- High rigidity.
- Excellent resistance to high temperatures.
- Excellent resistance to impact even at low temperatures.
- Good resistance to ageing in hot air in contact with oils and fuels.
- Excellent behaviour during hot-blade welding and vibration.

Besides the above-mentioned advantageous characteristics, the use of polyamide in the production of hollow bodies by blowing, also allows a high degree of surface finishing of the product obtained, so that they can be directly painted or decorated with adhesive transfers.

Furthermore, the hollow polyamide bodies obtained by blowing have a low static permeability, therefore they represent a valid alternative to hollow bodies obtained with multi-layer techniques, especially if they are destined to contain hydrocarbons.

Further characteristics of the invention will be made clearer by the detailed description that follows, referring to a purely exemplary and therefore non-limiting embodiment thereof, illustrated in the appended drawings, in which:

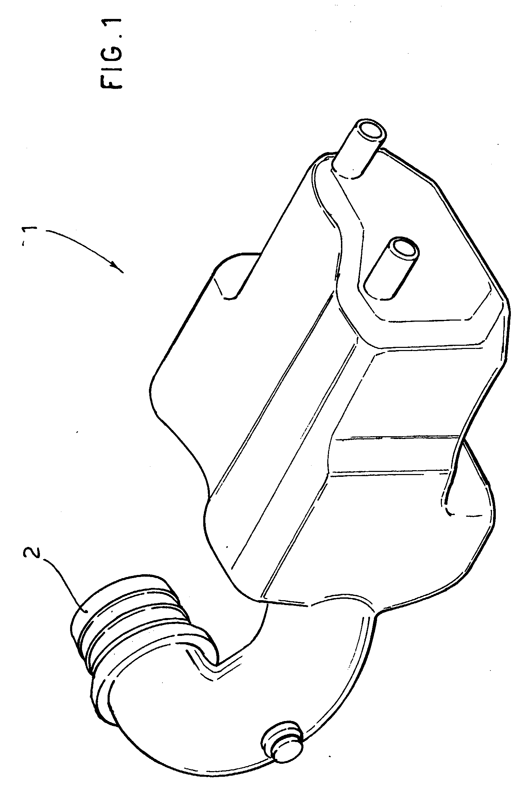

Figure 1 is an axonometric view of a tank for a motor cycle obtained by blowing of polyamide according to the invention.

With reference to Figure 1, an embodiment of the invention is shown by way of example.

A hollow body or parison is obtained by a procedure of extrusion of polyamide-based plastic material.

Among the polyamide-based materials, preference is given to those that contain a glass fibre filler (for example up to 15% in weight of glass fibre) and that display the following mechanical and thermal characteristics:
- Tensile modulus of 1850-6500 Mpa
- Isod-V impact strength of 14.5-90 KJ/m² measured at 0-23°C
- Charpy-V impact strength of 20 KJ/m² measured at -30°C
- Melting point of 222-280°C.
- Linear expansion coefficient // of 4-7 E-5°C measured at 23-85°C.

The parison, in the semi-solid state, is enclosed in a mold formed by two half-shells, into which it is blown by means of a jet of compressed air. Blowing causes the polyamide material in the semi-solid state of the parison to be distributed on and adapt to the walls of the mold. After having undergone adequate cooling, the two half-shells of the mold are opened, freeing the finished product 1 which has an outer profile complying with the inside walls of the mold.

As shown in Figure 1, in the present embodiment the end product 1 is a technical article, to be precise, a motor cycle fuel tank, that has an irregular outer surface with numerous parts in which there are different radiuses of curvature.

The tank 1 has a connector part 2 with a circular duct that leads into the inner hollow part. This duct 2 must be of such a size as to accommodate a nozzle of a fuel pump, to allow fuel to enter the tank 1.

Numerous trials, tests and structural analyses have been carried out on the tank 1, in comparison with items obtained by blowing of polyethylene and polypropylene according to the prior art. As a result it has been established that, using the method according to the invention, the following advantages are observed:

A uniform distribution of the thicknesses of the tank is obtained, even in the peripheral areas or in the areas with different radiuses of curvature.

The most critical parts of the tank 1, such as the parts with more pronounced radiuses of curvature, for example, have a greater mechanical strength, if compared with the mechanical strength of items obtained by blowing of polypropylene or polyethylene according to the prior art.

The tank 1, as a whole, has a high mechanical resistance even at high temperatures.

The tank 1 has a low fragility and good shock absorbing characteristics even at low temperatures.

In addition, the low static permeability of polyamide makes the tank 1 comply with the standards for containment and/or emission of hydrocarbons into the air.

Furthermore, after repeated and prolonged tests, a surprising discovery was the high degree of finish of the outer surface of the tank, which could be painted directly or decorated with adhesive transfers. The decorations carried out on this surface have proved to be indelible and have achieved a prolonged duration over time, without in the least losing the brightness of their colours. By contrast, items made by blowing of polyethylene or polypropylene do not withstand painting and decoration with transfers. In fact, having a greater coefficient of absorption, after a short period of time the surface paint is absorbed and disappears.

The above detailed description refers to a fuel tank, it being understood that the invention extends to any technical article within the reach of a person skilled in the art, without thereby departing from the scope of the invention defined by the appended claims.

## Claims

1. An article obtained by blow molding of a hollow body or parison of extruded plastic material, characterized in that said plastic material is polyamide based.

2. An article according to claim 1, characterized in that said polyamide-based plastic material contains a glass fibre filler.

3. An article according to claim 2, characterized in that said polyamide-based plastic material is strengthened by 15% in weight of hot stabilized glass fibre.

4. An article according to any preceding claims characterized in that said polyamide based plastic material has a tensile modulus of 1850-6500 Mpa, an Isod-V impact strength of 14.5-90 KJ/m² measured at 0-23°C, a Charpy-V impact strength of 20 KJ/m² measured at -30°C, a melting point of 222-280°C and a linear expansion coefficient // of 4-7 E- 5°C measured at 23-85°C.

5. An article according to any one of the preceding claims, characterized in that it has a technical shape with an irregular profile of the outer surface.

6. An article according to claim 5, characterized in that it has parts with different and not uniform radiuses of curvature.

7. An article according to one of the preceding claims, characterized in that it has a uniform distribution of thicknesses.

8. An article according to any of the preceding claims, characterized in that it can be decorated on its outer surface.

9. An article according to claim 8, characterized in that it can be decorated by painting.

10. An article according to claim 8, characterized in that it can be decorated by transfer printing.

11. An article according to one of the preceding claims, characterized in that it is a motor cycle fuel tank.

12. An article according to one of the preceding claims, characterized in that it is a shell of an electrical appliance.

13. The use of polyamide-based plastic material for the production of hollow bodies with an extrusion and blowing procedure.

14. The use according to the preceding claim for the production of fuel and oil tanks for motor vehicles.
